# EUROPEAN PATENT SPECIFICATION

(11) **EP 0 493 023 B1**
(45) Date of publication and mention of the grant of the patent: **22.06.1994**
(21) Application number: 91311874.1
(22) Date of filing: 20.12.1991
(51) Int. Cl.: C01G 49/10

(54) **Production of ferric chloride**
Herstellung von Eisen-III-Chlorid
Production de chlorure ferrique

(30) Priority: 21.12.1990 FI 906351
(43) Date of publication of application: 01.07.1992
(73) Proprietor: NESTE OY, SF-02150 Espoo (FI)
(72) Inventor: Knuuttila, Pekka, SF-06400 Porvoo (FI); Jokinen, Simo, SF-90150 Oulu (FI); Judin, Vesa-Pekka, SF-28660 Pori (FI); Vuorisalo, Juhatuomas, SF-28800 Pori (FI); Salanne, Simo, SF-90100 Oulu (FI)
(74) Representative: Lamb, John Baxter

(56) References cited:
- GB-A- 1 232 307
- US-A- 4 248 851
- CHEMICAL ABSTRACTS, vol. 110, no. 22, 29 May 1989, Columbus, Ohio, US; abstractno. 195801G, TAN ZHENGHONG: 'preparation of ferric chloride' page 169 ;column Left; &CN87107648 ,10 august 1988
- CHEMICAL ABSTRACTS, vol. 78, no. 18, 7 May 1973, Columbus, Ohio, US; abstract
- no. 113368E, SHIBNEVA ET AL: 'recovery of ferric chloride sublimates' page 120;column LEFT ; & Zh. Prikl. Khim. (Leningrad), 1973, vol. 46, no. 1, pages 180-1
- CHEMICAL ABSTRACTS, vol. 104, no. 22, 2 June 1986, Columbus, Ohio, US; abstract no.189201W, KORABLEVA ET AL: 'ferric oxide hydrate' page 163 ;column RIGHT ; & SU 1217787, 15 March 1986

## Description

The present invention relates to a method for preparing an anhydrous ferric chloride from a dilute ferrous or ferrous-ferric chloride solution.

Ferric chloride, FeCl₃, is conventionally prepared in anhydrous form by allowing chlorine gas to react with glowing iron. Solutions of ferric chloride are prepared by dissolving an iron oxide or carbonate or metallic iron in hydrochloric acid or nitrohydrochloric acid. When crystallizing from water, the ferric chloride forms various hydrates, such as the hexahydrate FeCℓ₃.6H₂0, i.e. the so-called yellow iron chloride, known as a commercial product.

Methods are known in which ferrous chloride, FeCℓ₂, acting as a reactant is oxidized to ferric chloride. Finnish patent publication no. 77006 describes a method for partially oxidizing FeCl₂ into FeCl₃. In this method, a temperature of 350°C-675°C is maintained in a tubular reaction area, and a filling layer, moving downwards contains solid ferrous chloride and carbon, whilst oxygen gas is passed upwards from below. Several ways are known for converting ferrous chloride into ferric chloride e.g. by using chlorine (see Finnish applications nos. 892059, 892060 and 892061). A method is also known for converting a concentrated ferrous chloride solution into ferric chloride e.g. by means of oxygen gas (US-A- 4,248,851).

Ferric chloride is used, for example, for purifying waters as well as in industry as an oxidation agent, e.g. in the dyestuffs industry, or as a catalyst, e.g. in Friedel-Crafts syntheses.

Ferric chloride is most commonly used as a solution, but in some specific applications an anhydrous crystalline salt is required. When, for example, preparing conductive polymers, anhydrous ferric chloride (FeCℓ₃) is used as an oxidation catalyst, which is partially reduced in the process to a bivalent ferrous chloride (FeCℓ₂). The ferric chloride acts in the reaction as an oxidant, receiving 2 electrons per 1 mol of monomer and simultaneously being reduced to ferrous form. The released protons and the chloride combine to form HCℓ. Water, and possibly alchol is used for washing the polymer, and the wash water obtained is a dilute ferrous-ferric chloride solution containing hydrochloric acid and organic compounds. So far, it has not been possible to prepare anhydrous FeCl₃, since ferric chloride easily decomposes into oxychloride and hydrochloric acid. It has now surprisingly been observed that a preparation is possible, if it is performed in accordance with the invention.

The purpose of the present invention is to, prepare, from an iron chloride/water solution, an anhydrous ferric chloride having a suitable particle size and form.

According to the invention there is provided a method for preparing an anhydrous ferric chloride from a hydrous solution containing ferric chloride, that possibly also contains organic substances, which comprises the following steps:
a)removing water from a ferric chloride-water solution, or a solution in which at least a portion of the ferrous chloride has possibly been converted by oxidation into ferric chloride, by drying in an atmosphere containing hydrochloric acid, and
b) refining the anhydrous ferric chloride by sublimation into the gas phase in a chlorine-containing atmosphere and by subliming it into pure crystalline ferric chloride.

If the regenerated solution contains bivalent iron, it can be converted by oxidation into trivalent iron. For example hydrogen peroxide, oxygen or chlorine can be used as an oxidant.

The oxidation by hydrogen peroxide can even occur in a relatively dilute solution according to the following reaction equation: $\text{2 FeCl₂ + 2 HCl + H₂O → 2 FeCl₃ + H₂O}$

After the oxidation, there is no free hydrochloric acid to be neutralized in the solution, as is the case when using chlorine.

It is advantageous, but not necessary that the iron chloride solution is concentrated before the drying to be performed in an HCl atmosphere. The concentration may be performed before the oxidation, during the oxidation or thereafter. The concentration of the solution may be performed e.g. by means of a multiphase evaporator into a concentration of 10-18%, preferably 15-16%, whereby the organic solvent residues are simultaneously stripped away.

The drying occurs in an atmosphere containing HCl for maintaining the product as a ferric chloride and thus for avoiding its decomposition into ferric oxychloride (FeOCl) or ferric oxide (Fe₂O₃) and hydrochloric acid (HCl). First, various iron hydrates are obtained, and by further increasing the temperature, crystal waters leave the solution up to ca 150°C. The drying is most preferably performed at 70-110°C. The product is essentially an anhydrous FeCl₃ possibly containing impurities of the reactant.

The sublimation step comprises an increase in the temperature over 250°C (however preferably 275-350°C) in a Cl₂ atmosphere. The pure FeCl₃ then sublimates (evarotares) into a gas phase, and it may be sublimed on a colder surface.

The drying cannot be performed directly by heating in an air atmosphere, since ferric chloride decomposes e.g. into an iron oxide and hydrochloric acid. Instead, a dilute iron chloride residue solution containing organic substances may be evaporared into a solution containing even 16% of iron either before the oxidation or thereafter.

The actual sublimation has to occur in a Cl₂/HCl atmosphere. In this case, FeCl₃ does not decompose. The sublimed ferric chloride crystallizes into a cooled disillation receiver, whereby a pure anhydrous ferric chloride is obtained. By varying the conditions, the crystalline size and for may be adjusted e.g into a very small crystalline form, which may be reused e.g. as an oxidant when polymerizing heterocyclic compounds.

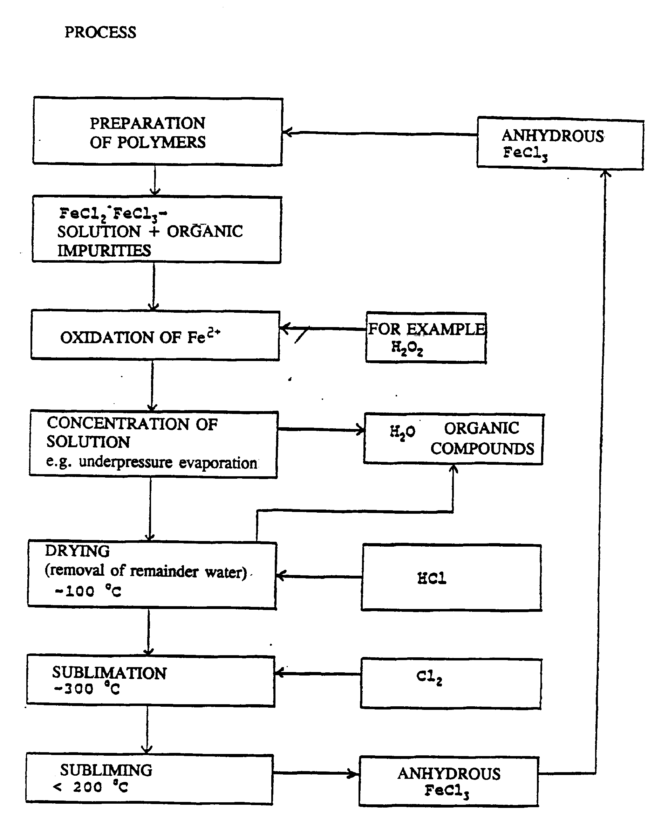

A principal process scheme of a recirculation of ferric chloride used in a preparation of polymers for reusage is shown in the accompanying drawing.

It has to be observed that although the inventive actual final product is in fact crystalline and anhydrous FeCl₃, iron salts in solution known as water chemicals are obtained e.g. from the concentration step during the process.

It has also to be observed that although the invention has been described by using as a raw material an Fe²⁺/Fe³⁺ chloride containing organic compounds, it may be applied to the conversion of any hydrous iron-containing solution into anhydrous ferric chloride. In this case, the steps are used only when applicable; e.g. if the reactants is a slightly concentrated ferric chloride solution, a start may be been directly from the drying step. For example picckling solutions used in the steel industry may be given as examples of such solutions.

The following examples describe the invention:

### Example 1

A ferric chloride solution was dried by spray drying, whose composition was: 16.0% of Fe³⁺, 30.5% of Cl. The carrier gas of the drying was air, whose temperature was 180°C. The analysis of the dry product was: 34.0% of Fe³⁺, 0.7% of Fe²⁺, 38.0% of Cl, 10.8% of H₂O, and the molar ratio Cl⁻/Fe was 1.73. It can be seen that nearly 50% of the product had decomposed, since said preparation method did not correspond to the invention.

After sublimation and subliming 2.2. g of the intermediate product obtained above, 0.8 g of a crystalline anhydrous ferric chloride was obtained whose analysis was as follows: Fe 34%, Fe²⁺ < 0.01%, Cl 61% and the molar ratio Cl⁻/Fe 2.9, i.e. a product whose composition was as desired. The yield of the product from the reactant was only ca 40%.

### Example 2

A ferric chloride solution was dried in a fluidized-bed drier, the composition of which solution was: Fe³⁺ 16.0%, Fe²⁺ < 0.1%, Cl⁻ 65.0%, H₂O 0.31%. The intermediate product (0.91 g) was sublimated at 300°C in a Cl₂ cycle and sublimed on a cold surface. The composition of the product (0.71 g) was:
- Fe (total): 34%
- Fe²⁺: < 0.02%
- Cl: 64%
- H₂O: 0.1%
- Cl⁻Fe: 2.97%

### Example 3

When polymerizing the reactant solution obtained, whose composition was: 0.8% of Fe³⁺, 1.2% of Fe²⁺, 4.9% of Cl⁻, 1.3% of free HCl, one litre was taken and oxidated with H₂O₂ (4.4 g) and a solution was obtained, whose Fe²⁺ was < 0.02%. The solution was evaporated by means of an underpressure evaporator, until the total Fe was 13%. The solution contained organic substances as TOC < 0.1%, whereby they had stripped away during the evaporation. 5 ml of the solution was dried in a fluidized-bed drier in an HCl atmosphere, and 2.6 g of an anhydrous FeCl₂ was obtained, whose composition was:
- Fe (total): 32%
- Fe²⁺: 1.1%
- Cl: 65%
- [Cl]/[Fe]: 3.0%
- H₂O: 0.2%
- TOC: < 0.1%

The intermediate product (2.3 g) obtained was sublimated and sublimed in a Cl₂₋ cycle, whereby as a product was obtained 2.2 g of a crystalline FeCl₃, whose composition was:
- Fe (total): 34%
- Fe²⁺: < 0.01%
- Cl: 66.0%
- [Cl]/[Fe]: 3.0%
- H₂O: 0.2%
- TOC: < 0.1%
- Yield: 93%

## Claims

1. A method for preparing an anhydrous ferric chloride from an aqueous solution containing ferric chloride, that possibly also contains organic substances and/or ferrous chloride, comprising the steps of:
a) removing water from a ferric-chloride water solution, or a solution in which at least a portion of the ferrous chloride has possibly been converted by oxidation into ferric chloride, by drying in an atmosphere containing hydrochloric acid; and
b) refining the anhydrous ferric chloride by sublimation into the gas phase in a chlorine-containing atmosphere and by subliming it into pure crystalline ferric chloride.

2. A method according to claim 1, characterized in that hydrogen peroxide is used as an oxidant to oxidize ferrous chloride to ferric chloride.

3. A method according to claim 1, characterized in that the concentration of the iron-containing solution, before the drying step, is 10-18%, more preferably 13-16%.

4. A method according to claim 1, characterized in that as an atmosphere in the drying step that is used an essentially dry (anhydrous) HCl diluted with an inert gas.

5. A method according to claim 1, characterized in that the solution is so concentrated that the product to be dried contains only water of crystallization.

6. A method according to claim 1, characterized in that the reactant solution is a simple ferrous chloride solution or a simple ferric chloride solution.

7. A method according to claim 3 or claim 5, characterized in that the oxidation (b) of the solution is performed before the concentration (a) or simultaneously.

## Patentansprüche

1. Verfahren für die Herstellung eines wasserfreien Eisen(III)-chlorids aus einer wäßrigen Lösung, die Eisen(III)-chlorid enthält, das möglicherweise ebenfalls organische Substanzen und/oder Eisen(II)-chlorid enthält, das die Schritte aufweist:
a) Abtrennen des Wassers aus einer Eisen(III)-chlorid/Wasser-Lösung oder einer Lösung, in der mindestens ein Teil des Eisen(II)-chlorids möglicherweise durch Oxidation in Eisen(III)-chlorid umgewandelt wurde, durch Trocknen in einer Atmosphäre, die Salzsäure enthält; und
b) Reinigen des wasserfreien Eisen(III)-chlorids durch Sublimation in die Gasphase in einer chlorhaltigen Atmosphäre und durch dessen Sublimieren zu reinem, kristallinem Eisen(III)-chlorid.

2. Verfahren nach Anspruch 1, dadurch gekennzeichnet, daß Wasserstoffperoxid als Oxidationsmittel verwendet wird, um Eisen(II)-chlorid zu Eisen(III)-chlorid zu oxidieren.

3. Verfahren nach Anspruch 1, dadurch gekennzeichnet, daß die Konzentration der eisenhaltigen Lösung vor der Trocknungsstufe 10 bis 18 % beträgt, vorzugsweise 13 bis 16 %.

4. Verfahren nach Anspruch 1, dadurch gekennzeichnet, daß bei der Trocknungsstufe als Atmosphäre eine im wesentlichen trockene (wasserfreie) HCl, verdünnt mit einem inerten Gas, verwendet wird.

5. Verfahren nach Anspruch 1, dadurch gekennzeichnet, daß die Lösung so konzentriert ist, daß das zu trocknende Produkt nur Kristallwasser enthält.

6. Verfahren nach Anspruch 1, dadurch gekennzeichnet, daß die Reaktantenlösung eine einfache Eisen(II)-chlorid-Lösung oder eine einfache Eisen(III)-chlorid-Lösung ist.

7. Verfahren nach Anspruch 3 oder 5, dadurch gekennzeichnet, daß die Oxidation (b) der Lösung vor der Konzentration (a) oder gleichzeitig durchgeführt wird.

## Revendications

1. Procédé de préparation de chlorure ferrique anhydre en partant d'une solution aqueuse contenant du chlorure ferrique contenant éventuellement aussi des substances organiques et/ou du chlorure ferreux, ledit procédé comprenant les étapes suivantes:
a) éliminer l'eau d'une solution aqueuse de chlorure ferrique ou d'une solution dans laquelle au moins une partie du chlorure ferreux a été transformée éventuellement en chlorure ferrique par oxydation par séchage dans une atmosphère contenant de l'acide chlorhydrique, et
b) raffiner le chlorure ferrique anhydre par sublimation en phase gazeuse dans une atmosphère contenant du chlore et le déposer sous forme de chlorure ferrique pur et cristallin.

2. Procédé selon la revendication 1, caractérisé en ce que l'on utilise comme oxydant du peroxyde d'hydrogène pour oxyder le chlorure ferreux en chlorure ferrique.

3. Procédé selon la revendication 1, caractérisé en ce que la concentration de la solution contenant du fer avant l'étape de séchage est comprise entre 10 et 18% et, de préférence, entre 13 et 16%.

4. Procédé selon la revendication 1, caractérisé en ce qu'on utilise comme atmosphère pour l'étape de séchage du HCl anhydre essentiellement sec dilué avec un gaz inerte.

5. Procédé selon la revendication 1, caractérisé en ce que la solution est concentrée de façon que le produit à sécher contienne uniquement de l'eau de cristallisation.

6. Procédé selon la revendication 1, caractérisé en ce que la solution de réactif est une simple solution de chlorure ferreux ou une simple solution de chlorure ferrique.

7. Procédé selon la revendication 3 ou la revendication 5, caractérisé en ce que l'oxydation (b) de la solution est effectuée avant la concentration (a) ou simultanément.
